# EUROPEAN PATENT APPLICATION

(11) **EP 1 980 966 A1**
(43) Date of publication of application: **15.10.2008**
(21) Application number: 07290448.5
(22) Date of filing: 11.04.2007
(51) Int. Cl.: G06F 21/00, H04H 1/00

(54) **A USB token for a mobile TV terminal**

(71) Applicant: GEMPLUS, 13420 Gémenos (FR)
(72) Inventor: Garagossian, Michel, c/o Axalto S.A., 92190 Meudon (FR)
(74) Representative: Jacquot, Ludovic R. G.

(57) **Abstract**

The invention relates to a mobile content delivery user equipment comprising a mobile receiver and storing at least one deciphering key (K) which is necessary for deciphering a mobile content as transmitted onto the mobile content delivery user equipment, the mobile content delivery user equipment being operable to decipher such content using the deciphering key and make an end-user enjoy the deciphered content, characterized in that the mobile receiver has an Universal Serial Bus connector and the mobile content delivery user equipment further comprises a removable module (30) which stores the key for deciphering the transmitted mobile content, said removable module having also an Universal Serial Bus connector, the connectors of the mobile receiver and of the removable module which stores the key for deciphering the transmitted mobile content being complementary to each other.

## Description

The invention relates to delivering of content onto mobile devices such as mobile TV, mobile radio, video envisioning either streamed while envisioning or downloaded prior to envisioning.

Mobile TV and more generally mobile content delivery may be performed onto a mobile phone, but also onto a mobile terminal having around the same size as a mobile phone, but not having the ability to mobile telephony, i.e. also called an "unconnected" device.

In the field of mobile delivery of content, which must be protected for commercial or security reasons, including mobile TV and mobile access to protected remote database, it has been proposed several schemes for ensuring that the end-user is indeed authorized to benefit from such content. In particular, it has been proposed to deliver a righte object, including a deciphering key and a set of envisioning rules, called a rights object, for the mobile handset of the end-user to be able to decrypt and read an broadcasted content arriving on the mobile phone in encrypted form.

In an other scheme, and because the mobile phones need a removable subscriber identity module, it has been proposed to store a decryption key in the service subscriber identity module for basic mobile telephony service, i.e. full duplex voice transmission service (SIM). Such scheme aims at allowing the end-user to continue envisioning his broadcasted contents when he changes his mobile handset, either phone or PDA, simply keeping his original subscriber identity module from mobile handset to mobile handset.

Such scheme has proved unsufficient for satisfying the needs of the end-users, of mobile operators, and of SIM manufacturers in terms of continuity of service, easiness to subscribe and manufacturing organization.

Indeed, delivering rights objects on a mobile network is not completely reliable, i.e. the rights objects may be difficult to download when being voluminous, it is not possible to have them follow the end-user when he replaces his handset.

Placing the rights objects in the SIM challenges a number of technical aspects, first because the end-user usually doesn't subscribe to the mobile content delivery when he gets his original SIM, implying that the mobile content delivery key has to be downloaded onto the SIM over-the-air during the life of the SIM. The SIM therefore needs to have the technical ability to host the mobile content delivery rights object, which is not the case for every SIM, and the SIM must be able to make use of the rights object onto the externally transiting content, which may be considered as a breach to security by some operators. Furthermore, in some deciphering schemes, the SIM is required a high level or connectivity, for example when the stream transits through the processor of the SIM to be deciphered by such, using the keys that remain protected inside the SIM. The SIMs are sometimes but not always able to implement such connectivity.

The purpose of the invention is to propose another way of conditionally allowing a mobile end-user to benefit from a delivered mobile content, which has the benefits of the SIM scheme, i.e. mainly continuity of service, while presenting the easiness of deployment existing in the rights download scheme, i.e. a scheme which allows the rights both to follow the end-user and to be delivered to him as simply as in the rights downloading scheme over handsets.

Such purpose is achieved by means of the present invention as recited in the appended claims.

Other purposes, benefits and aspects of the invention will appear through the following description, which is made in reference to the appended drawings, among which :
- figure 1 represents a mobile equipment of an end-user in a mobile telephony network, according to a preferred embodiment of the invention, viewed from above,
- figure 2 represents a mobile equipment of an end-user in a mobile telephony network, according to the same embodiment of the invention, viewed from underneath,
- figure 3 represents interactions between different parts of a mobile equipment of an end-user and with other elements of a mobile telephony network, according to the same embodiment of the invention.

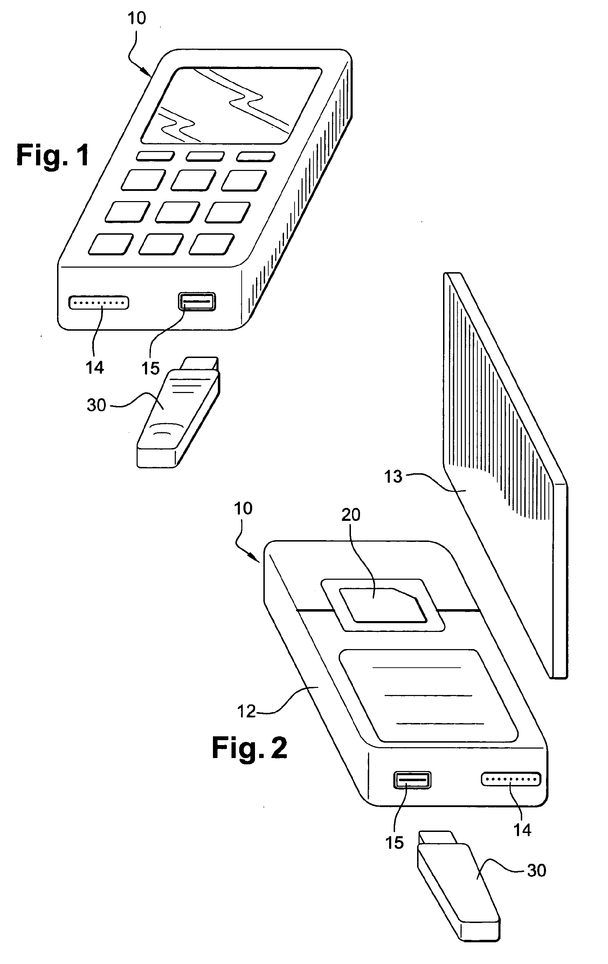

On figures 1 and 2, a mobile handset 10 is represented respectively from above and from underneath. Handset 10 comprises a cavity 11 equipped with contacts non represented, for receiving and connecting a SIM card 20, This cavity is typically placed underneath the mobile handset, between a main body 12 of the handset and a battery 13. The handset 10 has several connectors, two of which are represented. They comprise connector 14 which is aimed at connecting a power cable, and a Universal Serial Bus connector 15. In the present embodiment, the USB connector 14 is of the large and female type, so that it can easily be connected with a USB dongle, such as dongle represented under reference 30 on the figures.

Dongle 30 comprises a memory 31 and a processor 32, thereby allowing the dongle 30 to store and to run some pieces of software which will be described hereafter and which will be called applications in the context of the present embodiment.

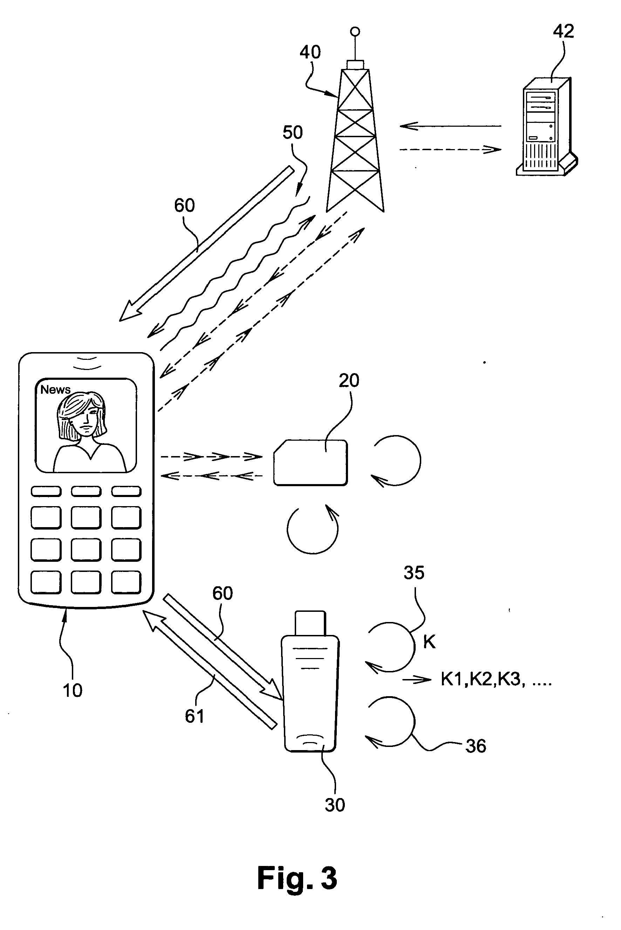

The roles of the SIM card 20 and of the USB dongle 30 will now be described in reference to figure 3.

According to a well known scheme, the SIM card is used for authenticating an end-user in a mobile telephony network, for the purpose of allowing the end-user open a connection to the network and benefit from the basic service of such network, i.e. voice communication with another end-user, either on a mobile phone or on a wired phone, connected directly or through SS7 network to the mobile telephony network. The mobile telephony network is represented under reference 40 on figure 3.

Telephony connection is open with network 40 by interaction with the SIM card 20, i.e. key challenge.

The SIM card 20 stores a secret key. An authenticating server 42 sends a random number to the SIM card 20 through the mobile phone 10. The SIM card 20 then carries out a specific security algorithm onto such random number, which algorithm is based on the secret key. The result of the algorithm calculation is sent by the SIM card 20 to the remote server 42 through the mobile phone 10. The authentication server 42 then checks whether such result corresponds to the result it has calculated itself on the basis of the same algorithm and same secret key as in the SIM card 20. The connection is authorized to the end-user if the result matches the one expected by the authentication server 42.

Once the connection is authorized and established, voice can be exchanged as schematized under reference 50 between the mobile handset 10 and other parts of the network.

As for itself, dongle 30 implements an authorization scheme for the end-user to access to mobile TV services. Mobile TV is nowadays broadcasted onto mobile equipments through the mobile networks, as a continuous stream 60 which is encrypted and requires the mobile equipment to store a dedicated deciphering key.

In the present embodiment, mobile handset 10 transits the received TV stream 60 onto the dongle 30 in the original enciphered status of the stream. Enciphered stream is therefore represented under same reference 60 between mobile handset 10 and donge 30. Dongle 30 is equipped with a memory which in the present case is a protected memory for storing secret data. Such protected memory is for example a smart card type memory, i.e. protected against most types of possible attacks which may maliciously attempt to read the content thereof.

Dongle 30 also comprises a processor which has the processing ability for receiving the TV stream 60, applying a deciphering algorithm thereon and replying back to the mobile handset with a such deciphered stream 61. The mobile handset is then able to play the deciphered stream 61 onto the display and loudspeakers or earplugs of the mobile handset 10.

For the purpose of deciphering the received stream 60, dongle 60 stores a deciphering key K in its protected memory and applies indirectly such deciphering key onto the received stream 60.

The deciphering key K is a master key, and the dongle 60 derives repetitively some stream applicable keys through a calculation based onto this master key K and onto additional information which is broadcasted together with in the broadcasted stream 60. such additional information may be session keys with are themselves encrypted with the secret key. The remaining of the broadcasted stream, i.e. the TV content in the present example, is encrypted with the session keys. This way, it is possible to change session key regularly, both the encrypted value of the session key which is transmitted to the mobile handset and the same applied value for encrypting the TV stream. This presents person having maliciously discovered the value of the session key to be able to play the content for a duration above the limited duration of use of the session key.

Dongle 60 stores and runs an application 35 which derives the session keys K1, K2, K3, ... based on the deciphering key K and on the broadcasted stream 60.

Once the current session key Ki derived, dongle 60 applies the deciphering algorithm, referenced 36, onto the TV stream 60.

Atlhough described as running a deciphering algorithm, the dongle may only be a secure storage for the deciphering key or any rights object. Dongle 60 may deliver such key to an entrusted mobile handset, or may implement a deriving application such as application 35 for thereafter delivering the derived keys K1, K2, K3, ...to the mobile handset 10.

An end-user who has originally subscribed only to the basic telephony service can thereafter subscribe to a content decryption service. When having subscribed to such content decryption, dongle 60 storing the secret key K is physically provided to the end-user, i.e. either sent by regular postage or delivered by hand in a phone store or in a supermarket.

In another embodiment, a virgin dongle 60 may be downloaded with the secret key 60, either through mobile telephony network, either on a personal computer through a special secure communication on the internet.

Dongle 60 is inserted into the USB slot 15 of the mobile handset when the end-user desires to watch the broadcasted TV program, the SIM 20 remaining docked permanently inside the mobile handset 10.

In an advantageous embodiment, the rights which are stored in the dongle 30 are independent of the rights stored in the SIM, thereby allowing an end-user to use his content decrypting rights in any mobile handset hosting the SIM of whatever else person.

On the contrary, the rights in the dongle 30 may be associated to certain credentials of the end-user, such as the end-user's IMSI as stored in the SIM card, so that the dongle 30 can implement its content decrypting ability only if the SIM card is present in the same mobile handset 10. An credentials reading or key challenge may be implemented in such scheme, where an application in the dongle 30 reads available information in the SIM card or performs a key challenge onto the card, as though the dongle 30 was a rudimentary authenticating server.

Dongle 30 may be easily replaced by a mobile TV operator, for example in case of security ability upgrading of its fleet of dongles, without having to replace the SIM cards of the end-users. Deploying of dongles is very easy, as personalization of the dongles may be very poor or even non existing in case of all identical dongles.

Dongle 30 has been described as deciphering on-the-go a continuous stream of mobile TV program content. In another embodiment the content may be stored on the mobile handset 10 and decrypted only once the end-user whishes to play the content on the mobile handset.

In the present mobile TV context, dongle 30 may store and run multimedia applications, for example an application which communicates with a remote server and with the end-user through keyboard and display for downloading some elements of video which have been interactively chosen by the end-user.

## Claims

1. A mobile content delivery user equipment comprising a mobile receiver and storing at least one deciphering key (K) which is necessary for deciphering a mobile content as transmitted onto the mobile content delivery user equipment, the mobile content delivery user equipment being operable to decipher such content using the deciphering key and make an end-user enjoy the deciphered content, **characterized in that** the mobile receiver has an Universal Serial Bus connector and the mobile content delivery user equipment further comprises a removable module (30) which stores the key for deciphering the transmitted mobile content, said removable module having also an Universal Serial Bus connector, the connectors of the mobile receiver and of the removable module which stores the key for deciphering the transmitted mobile content being complementary to each other.

2. The mobile content delivery user equipment according to claim 1, **characterized in that** it consists in a mobile telephony user equipment, the mobile receiver consisting in a mobile phone, the mobile telephony user equipment further comprising a removable subscriber identity module (20) allowing access to mobile telephony service, the removable module (30) which carries the key for deciphering the transmitted mobile content being distinct from the removable subscriber identity module (20).

3. The mobile content delivery user equipment according to claim 1 or claim 2, **characterized in that** the deciphering key (K) is a mobile TV deciphering key.

4. The mobile content delivery user equipment according to the preceding claim, **characterized in that** the deciphering key (K) is a key for deciphering a broadcasted TV stream (60),

5. The mobile content delivery user equipment according to the preceding claim, **characterized in that** the deciphering key is a master key, and the mobile user equipment is operable to derive stream applicable keys (K1, K2, K3...) through a calculation based onto this master key and onto additional information which is broadcasted in the broadcasted stream.

6. The mobile content delivery user equipment according to the preceding claim, **characterized in that** the removable module which carries the key for deciphering mobile content comprises a memory and a processor, the removable module which carries the key for deciphering mobile content (30) further storing and running an application which derives stream applicable keys based on the deciphering key and based on additional information which is broadcasted in the broadcasted stream (60).

7. The mobile content delivery user equipment according to any preceding claim, **characterized in that** the mobile receiver transits the broadcasted stream into the removable module which carries the content deciphering key and the removable module comprises logic using the deciphering key for deciphering the TV stream (60) inside the removable module.

8. The mobile content delivery user equipment according to any preceding claim, **characterized in that** the removable module (30) which carries the content deciphering key stores and runs a multimedia application.

9. The mobile content delivery user equipment according to any preceding claim, **characterized in that** the mobile receiver comprises recording means for recording a TV program, and the removable module storing the content deciphering key (30) is operable to decipher a recorded TV program at a time which is different from the time when the TV program is broadcasted.
